# EUROPÄISCHE PATENTSCHRIFT

(11) **EP 4 168 330 B1**
(45) Veröffentlichungstag und Bekanntmachung des Hinweises auf die Patenterteilung: **27.11.2024**
(21) Anmeldenummer: 22730900.2
(22) Anmeldetag: 30.05.2022
(51) Int. Cl.: B65G 9/00, B65G 47/61

(54) **TRANSPORTTASCHE ZUM HÄNGENDEN TRANSPORT VON FÖRDERGUT SOWIE EINE ENTLADESTATION, SCHLIESSSTATION UND EINE FÖRDERANLAGE FÜR DIESE TRANSPORTTASCHEN**
TRANSPORT BAG FOR SUSPENDED TRANSPORT OF MATERIAL TO BE CONVEYED, AND UNLOADING STATION, CLOSING STATION AND A CONVEYOR SYSTEM FOR THESE TRANSPORT BAGS
SAC DE TRANSPORT POUR LE TRANSPORT DE MANIÈRE SUSPENDUE DE PRODUITS À TRANSPORTER, STATION DE DÉCHARGEMENT, STATION DE FERMETURE ET INSTALLATION DE TRANSPORT POUR LESDITS SACS DE TRANSPORT

(30) Priorität: 17.06.2021 DE 102021003096
(43) Veröffentlichungstag der Anmeldung: 26.04.2023
(73) Patentinhaber: SSI Schäfer Automation GmbH (AT), 8051 Graz (AT)
(72) Erfinder: JANZEN, Paul, 33619 Bielefeld (DE)
(74) Vertreter: Witte, Weller & Partner Patentanwälte mbB
(86) Internationale Anmeldenummer: PCT/EP2022/064647
(87) Internationale Veröffentlichungsnummer: WO 2022/263160

(56) Entgegenhaltungen:
- EP-A1- 2 130 968
- EP-A1- 2 130 968
- EP-A1- 2 130 968
- WO-A1-91/03958
- DE-A1- 102018 213 489
- DE-A1- 102018 213 489
- DE-A1- 102018 213 489
- DE-U1- 202019 103 850
- DE-U1- 202019 103 850
- DE-U1- 202019 103 850
- JP-A- 2011 105 499
- JP-A- 2011 105 499
- JP-A- 2011 105 499
- US-A- 5 489 017
- US-A- 5 489 017
- US-A- 5 489 017
- US-A1- 2014 284 180
- US-A1- 2014 284 180
- US-A1- 2014 284 180

## Beschreibung

Die Erfindung betrifft eine Transporttasche zum hängenden Transport von Fördergut nach dem Oberbegriff des Anspruchs 1. Ferner betrifft die Erfindung eine Entladestation und eine Schließstation für derartige Transporttaschen sowie eine Förderanlage mit einer derartigen Station.

Aus der EP 2 130 968 A1 ist eine Tragvorrichtung bekannt, die eine Tragwand mit einer starren Vorderwand sowie einer flexiblen Rückwand und eine Verschlusseinrichtung zur lösbaren Verbindung der Vorderwand mit der Rückwand aufweist. Zum Lösen der Verbindung zwischen der Vorderwand und der Rückwand weist die Tragvorrichtung eine Betätigungseinrichtung mit einem beabstandet zu der Verschlusseinrichtung angeordneten Betätigungsmittel und einem zwischen dem Betätigungsmittel und der Verschlusseinrichtung wirkenden Übertragungsmittel auf. Das Übertragungsmittel ist an einer Vorderseite der Vorderwand angeordnet und als starre Zugstange ausgebildet. Um die freigängige Verlagerung des Übertragungsmittels auch bei einer Beladung der Tragvorrichtung mit Waren zu gewährleisten ist die Vorderwand starr ausgebildet. Durch die starre Ausbildung der Vorderwand ist diese besonders schwer und die zum Transport der Waren zur Verfügung stehende maximale Traglast der Tragvorrichtung ist reduziert. Durch die eingeschränkte Flexibilität der Vorderwand ist eine Anpassung an die individuelle Geometrie der Waren zudem nicht möglich, wodurch diese nicht ausreichend fest umschlossen werden und aufgrund transportbedingter Vibrationen und Anfahrtsbeschleunigungen aus der Tragvorrichtung herausfallen können.

Aus der EP 3 231 741 A1 ist eine Tragvorrichtung zum Aufnehmen von Waren mit einer Tragwand und einer Verschlusseinrichtung bekannt. Die Tragwand umfasst eine Vorderwand und eine Rückwand und ist zwischen einem Verschlusszustand, in dem ein Tragvolumen zum Aufnehmen der Waren zumindest teilweise nach vorne, nach unten und nach hinten begrenzt ist, und einem geöffneten Zustand, in dem das Tragvolumen nach unten freigegeben anzuordnen ist. Die Verschlusseinrichtung weist zwei Schließmittel zum reversiblen Verbinden der Vorderwand mit der Rückwand in dem Verschlusszustand auf. Die beiden Schließmittel sind an der Tragwand angebracht. Beim Freigeben der Waren aus der Tragvorrichtung können insbesondere Waren großer Abmessungen zwischen der Tragwand und einem der beiden Schließmittel verkanten. Hierdurch kann es zu Stillstandszeiten kommen und die Waren können entfernt von dem beabsichtigten Entladeort aus der Tragvorrichtung herausfallen und dabei verloren gehen oder beschädigt werden. Aus der DE 20 2017 105 508U1 ist eine Transporttasche bekannt, umfassend eine Vorderwand, eine Rückwand und einen schwenkbaren Haltebügel, wobei die Vorderwand und die Rückwand jeweils an ihrem oberen Enden gelenkig mit dem Haltebügel verbunden sind und wobei am unteren Ende der Vorderwand wenigstens ein Kupplungselement angeordnet ist, dadurch gekennzeichnet, dass ein rinnen- oder wannenartiges Bodenelement (20; 120) mit einer ersten Seitenwand und einer zweiten Seitenwand vorgesehen ist, wobei die erste Seitenwand gelenkig mit der Rückwand verbunden ist und die zweite Seitenwand wenigstens ein Gegenkupplungselement aufweist, das mit wenigstens einem Kupplungselement wechselwirkt. Der Nachteil der Transporttasche ist das Beladen von der Seite.

Gemäß ihrer Zusammenfassung betrifft die DE 20 2019 103 850 U1 eine Transporttasche für eine Fördervorrichtung, aufweisend: - eine erste Taschenwand,- eine zweite Taschenwand,- eine an einem oberen Ende einer der Taschenwände angeordnete Einhängvorrichtung,- wobei an einem unteren, von der Einhängvorrichtung entfernten Ende der Taschenwände jeweils reversibel aneinander koppelbare Schließelemente angeordnet sind, mit denen die unteren Enden der Taschenwände zu einem Taschenboden miteinander verbindbar sind, wobei die Schließelemente derart ausgebildet sind, dass sie aus der die Transporttasche am unteren Ende verschließenden Transportstellung durch Relativbewegung außer Eingriff bringbar sind, um die Schließelemente zur Öffnung der Transporttasche am unteren Ende voneinander zu lösen. Als weiteren Stand der Technik nennt die DE 20 2019 103 850 U1 die folgenden Dokumente: EP 2 130 968 B1, FR 2 430 363 A1 und EP 3 442 884. Die DE 20 2019 103850 U1 offenbart die Merkmale des Oberbegriffs der Ansprüche 1 und 7.

Die bekannten Transporttaschen mit Mitteln zum Automatischen Entladen und Schließen und die Förderanlagen für die Transporttaschen sind aufwendig aufgebaut, erfordern komplizierte Schließstationen und Entladestationen, sind nicht effizient genug, teilweise lautstark, schwer und mit vielen zusätzlichen Sicherheitssystemen ausgestattet zum Vermeiden von Betriebsausfällen.

Der Erfindung liegt die Aufgabe zugrunde, eine gattungsgemäße Transporttasche zum hängenden Transport von Fördergut, eine Förderanlage für die Transporttaschen, sowie eine Entladestation und eine Schließstation derart weiterzubilden, dass eine effiziente, mit wenigen Teilen kompakt aufgebaute, leichte und in Förderrichtung faltbare Transporttasche entsteht, die in Förderanlagen transportiert und unkompliziert ohne großen Aufwand bei dem Transport in Entladestationen automatisch entladen und in Schließstationen geschlossen werden kann, insbesondere bei normaler Geschwindigkeit des Sortiersystems der Förderanlage.

Diese Aufgabe wird erfindungsgemäß durch die Transporttaschen gemäß den Ansprüchen 1 und 7, durch eine Förderanlage gemäß Anspruch 8, durch Entladestationen gemäß Anspruch 9 sowie durch Schließstationen gemäß Anspruch 10 gelöst.

Weitere Merkmale, Vorteile und Einzelheiten der Erfindung ergeben sich aus der folgenden Beschreibung von Ausführungen und Beispielen anhand der Zeichnungen.

Es wird dargestellt:
Fig. 1 eine Seitenansicht der Transporttasche im geöffneten Zustand,
Fig. 2 eine perspektivische Vorderansicht der Transporttasche im geöffneten Zustand,
Fig. 3 eine perspektivische Vorderansicht der Schaltmittel und Mittel für die Steuerung,
Fig. 4 eine Vorderansicht der Transportkupplung mit den elektrischen Schaltkontakten,
Fig. 5 eine Draufsicht der Schaltmittel,
Fig. 6 eine Seitenansicht der Transporttasche im Verschlusszustand,
Fig. 7 eine perspektivische Hinteransicht der Transporttasche im Verschlusszustand,
Fig. 8 eine Seitenansicht im Schnitt der Schaltmittel,
Fig. 9 eine perspektivische Draufsicht des Vorder-Rahmens,
Fig. 10 eine perspektivische Draufsicht des Hinter-Rahmens,
Fig. 11 eine Vorderansicht im Schnitt der Förderanlage und der Entladestation,
Fig. 12 eine perspektivische Hinteransicht der Förderanlage und der Entladestation,
Fig. 13 eine perspektivische Hinteransicht der Förderanlage und der Schließstation,
Fig. 14 eine Seitenansicht der Schließstation,
Fig. 15 eine Vorderansicht der Förderanlage und der Schließstation,
Fig. 16 eine perspektivische Hinteransicht der Transporttasche im Verschlusszustand,
Fig. 17 eine perspektivische Hinteransicht der Transporttasche im Geöffneten Zustand in der Entladestation,
Fig. 18 eine perspektivische Seitenansicht eines Fragments der Linearen Schließelemente,
Fig. 19 eine perspektivische Seitenansicht der Linearen Schließelemente,
Fig. 20 eine Vorderansicht der Linearen Schließelemente,
Fig. 21 eine Seitenansicht der Linearen Schließelemente,
Fig. 22 eine perspektivische Hinteransicht der Förderanlage und der Schließstation,
Fig. 23 eine Seitenansicht der Schließstation,
Fig. 24 eine Vorderansicht der Förderanlage und der Schließstation,
Fig. 25 eine perspektivische Vorderansicht der Beladestation,
Fig. 26 eine Seitenansicht der leeren Transporttaschen in der Förderanlage auf einer Staustrecke mit einem Anhalter,
Fig. 27 eine perspektivische Hinteransicht der leeren Transporttaschen in der Förderanlage auf einer Staustrecke mit einem Anhalter.

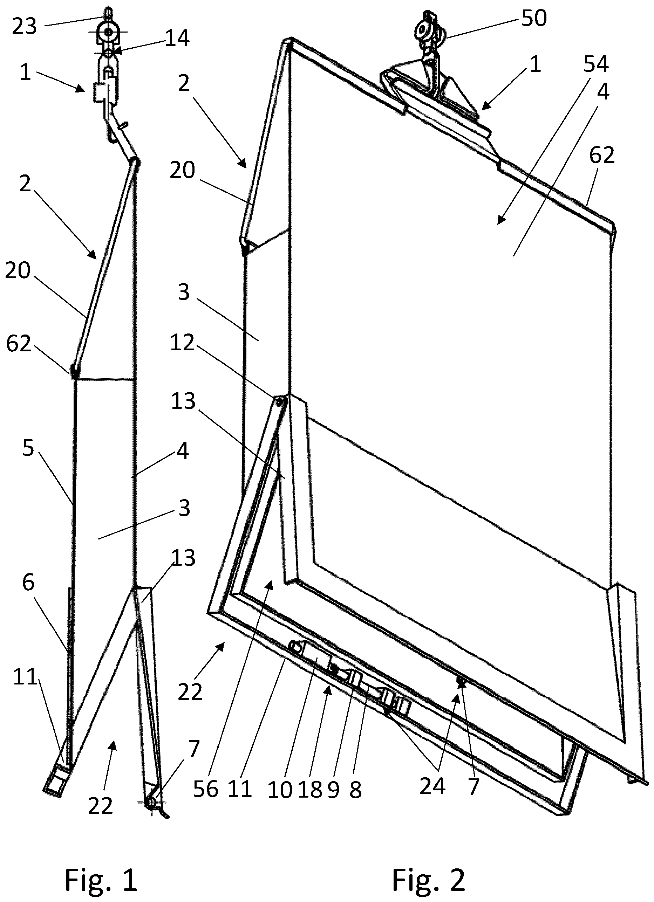

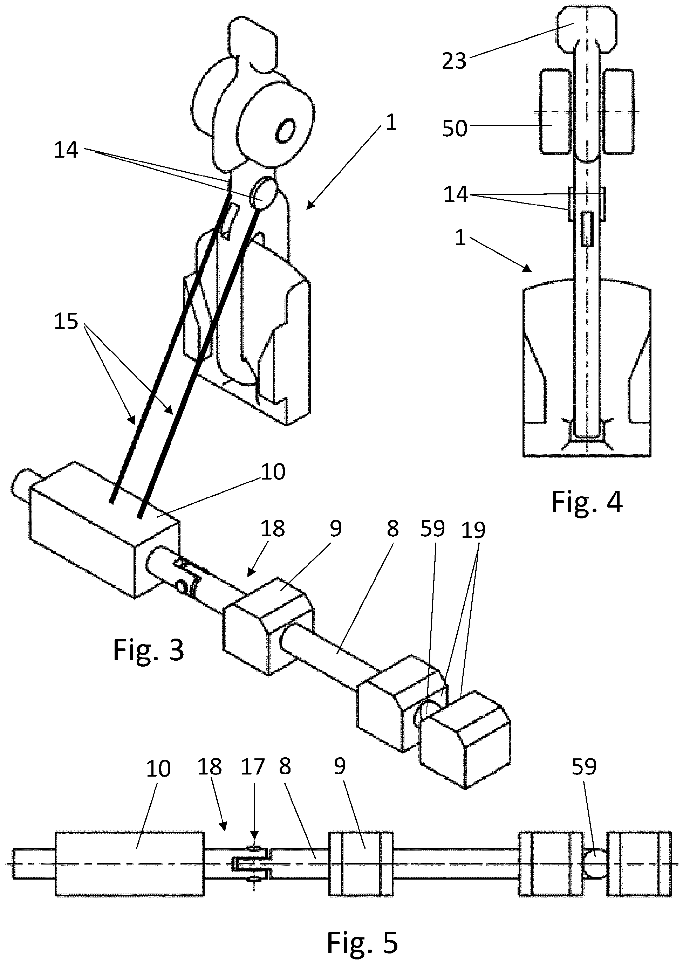

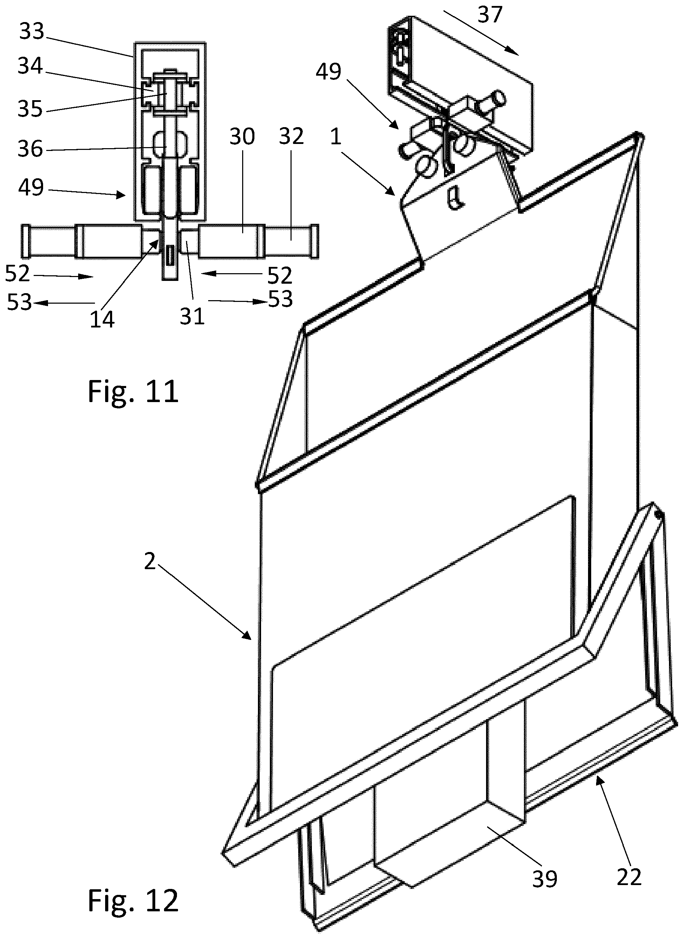

In Fig. 1 bis 5 ist eine Transporttasche 2 im geöffneten Zustand 22 abgebildet, bestehend aus einer Aufhängeeinrichtung 1 mit Rollen 50 und einer Kupplung 23 zur Übertragung gemäß Fig. 11 der Antriebskraft des Förderelements 35. Im Übrigen wird auf die DE102021002833A1 verwiesen, aus der die Aufhängeeinrichtung 1 vorbekannt ist. Auf den Rollen 50 sind die Transporttaschen 2 in einer Transportschiene 33 verschiebbar gelagert. Im unteren Bereich der Aufhängeeinrichtung 1 ist der Beladerahmen 20 eingebaut. Der Beladerahmen 20 ist rechteckig ausgebildet und besteht vorzugsweise aus einem Metalldraht. Auf dem Beladerahmen 20 ist die in Förderrichtung 37 faltbare Tragwand 54 mithilfe von Säumen befestigt und gesichert mit den Schutzleisten 62. Die Tragwand 54 besteht aus einer Vorderwand 4, einer Rückwand 5 und Seitenwänden 3 und ist zumindest teilweise aus flexiblem Stoff gebildet. Der Stoff ist vorzugsweise schwer entflammbar ausgebildet und insbesondere halogenfrei. Im unteren Bereich der Transporttasche 2 befindet sich die Verschlusseinrichtung 56 zum lösbaren Verbinden der Vorderwand 4 mit der Rückwand 5 in den Verschlusszustand 21 zum Aufnehmen des Förderguts 39 und zum Lösen der Verbindung zwischen der Vorderwand 4 und der Rückwand 5 aus dem Verschlusszustand 21 im geöffneten Zustand 22 zur Freigabe des Förderguts 39 nach unten. Die Verschlusseinrichtung 56 beinhaltet einen Vorder-Rahmen 13 und einen Hinter- Rahmen 11 die schwenkbar, mit Scharnieren 12 miteinander verbundenen sind und zusammenklappbar sind zum reversiblen Erzeugen eines Versschlusszustands 21 oder geöffneten Zustands 22 der Transporttasche 2. Der Vorder-Rahmen 13 ist an der Vorderwand 4 angebracht. Der Hinter-Rahmen 11 ist mit dem unteren Bereich 57 an der Rückwand 5 und mit den seitlichen Bereichen 29 an den Seitenwänden 3 angebracht. Die Rückwand 5 beinhaltet im unteren Außenbereich eine Stabilisierungsplatte 6 zum Verhindern des Verkantens des eingeladenen Förderguts 39. Die Schließmittel 24 zum reversiblen Verbinden und Öffnen der Verschlusseinrichtung 56 befinden sich im unteren Bereich der Verschlusseinrichtung 56 und bestehen aus einem Halteelement 7 mit einer Öse 45 in runder Form auf dem Vorder-Rahmen 13 und auf dem Hinter-Rahmen 11 aus einer reversiblen Schließverriegelung 18 bestehend aus einen elektrischen Antrieb 10, welcher ein linear bewegliches Riegelelement 8 antreibt mit einer abgeschrägten Spitze 59.

Das stabförmige Riegelelement 8 ist verbunden mit einem Scharnier 17 mit dem elektrischen Antrieb 10 und in den Linearführungen 9 gelagert, welche vorzugsweise Linearkugellager darstellen. Der elektrische Antrieb 10 wird mit einer elektrischen Leitung 15 mit den elektrischen Kontakten14 verbunden. Die elektrischen Kontakte 14 sind auf der Aufhängeeinrichtung 1 rechts und links spiegelbildlich in Förderrichtung platziert. Der elektrische Antrieb 10 ist vorzugsweise ein kostengünstiger Hubmagnet mit einer Federrückstellung und einem beweglichen stabförmigen Anker. Die Schließung der reversiblen Verriegelung 18 wird mithilfe der Feder des elektrische Antrieb 10 erreicht, dadurch das das Riegelelement 8 in die Öse 45 des Halteelements 7 einfährt, welches in diesem Moment zwischen den Führungen 19 eingeschlossen ist. Für die Öffnung wird der elektrische Antrieb 10 für eine kurze Zeit geschaltet, das Riegelelement 8 entfernt sich aus dem Halteelement 7 und die reversible Schließverriegelung 18 wird gelöst, die Verschlusseinrichtung 56 öffnet sich.

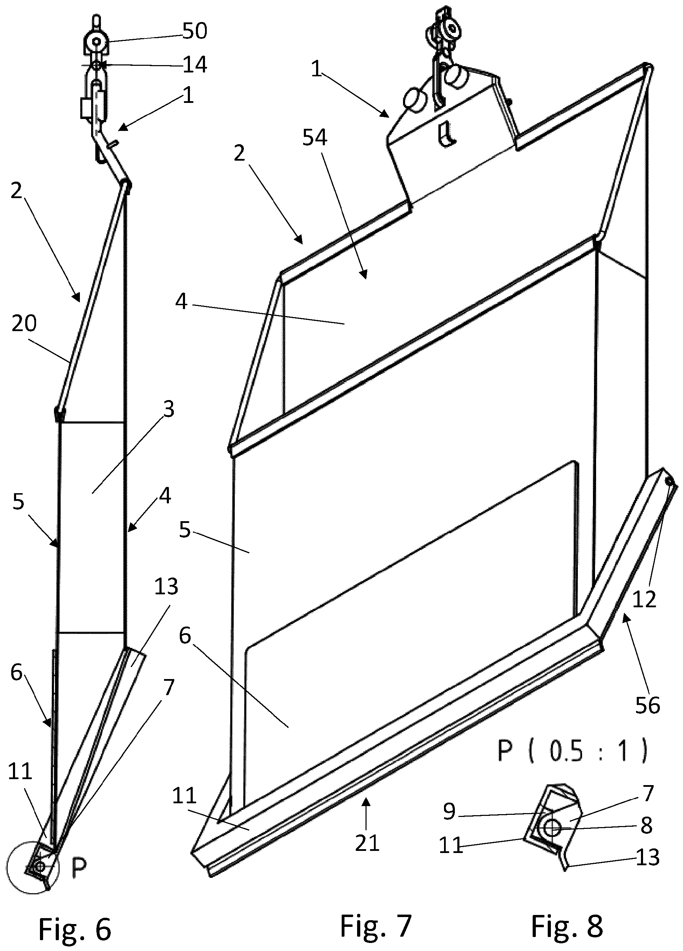

Gemäß Fig. 6 bis 8 ist die Transporttasche 2 im Verschlusszustand 21 dargestellt. Der Vorder-Rahmen 13 und der Hinter-Rahmen11 sind zusammengeklappt. Das Riegelelement 8 ist in die Öse 45 des Halteelements 7 reingefahren, welches in diesem Moment zwischen den Führungen 19 eingeschlossen ist. Die Transporttasche 2 befindet sich im Verschlusszustand 21 und ist bereit zur Aufnahme von Fördergut 39.

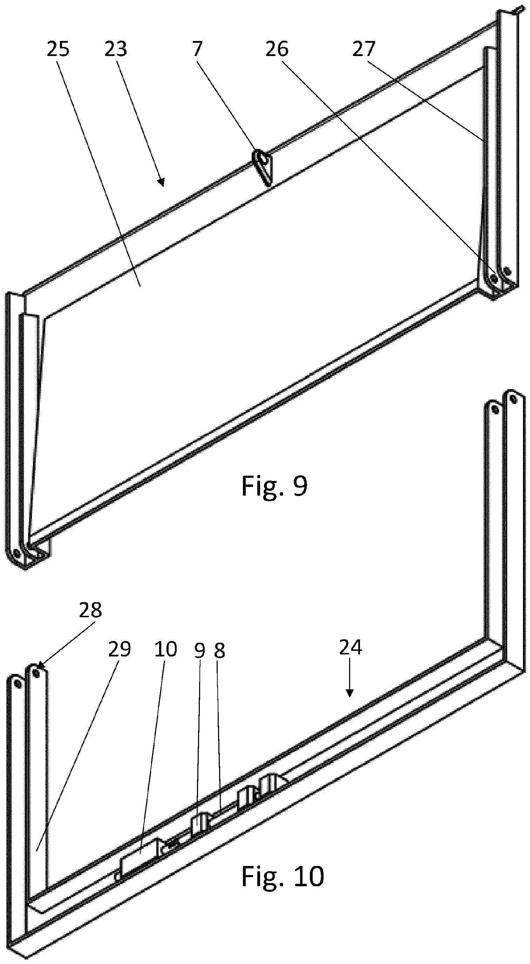

Der Vorder-Rahmen 13 bildet gemäß Fig 9 einen Grundköper 25 in U-Profilform mit beidseitigen Scharnier-Elementen 27 mit Scharnierlagern 26 für die Scharnierwelle. Im unteren Bereich des Vorder-Rahmen 13 befindet sich die Halterung 7 mit der Öse 45. Der Hinter-Rahmen 11 bildet gemäß Fig. 10 einen U-förmigen Rahmen aus einem U-Profil mit beidseitigen Scharnier-Elementen mit Scharnierlagern 28 für die Scharnierwelle. Im unteren Bereich des Hinter-Rahmens 11 befindet sich die reversible Schließverriegelung 18.

Gemäß Fig. 11 und 12 wird die Entladestation 49 für die Transporttaschen 2 mit einer Verschlusseinrichtung 56 darstellt, welche einen Vorder-Rahmen 13 und einen Hinter-Rahmen 11 aufweist, die schwenkbar mit den Scharnieren 12 miteinander verbunden sind und die zueinander zusammenklappbar sind. Die Entladestation 49 dient zum Ausladen des Förderguts 39 auf die Entladeplätze und zum Aufnehmen des ausgeladenen Förderguts 39. Die Entladestation 49 ist an der Förderanlage befestigt, welche vorzugsweise die Sortieranlage für die Transporttaschen 2 darstellt. Die Förderanlage weist vorzugsweise eine aus Aluminium gefertigte Transportschiene 33 mit einem kastenförmigen und symmetrisch ausgebildeten Querschnitt mit Förderelement-Führungen 34 mit den oberen Begrenzungsstegen für die Rollen 50 und mit den Laufstegen für die Rollen 50 auf. Das Förderelement 35 ist mittels eines nicht dargestellten Elektromotors umlaufend antreibbar. Der Elektromotor weist vorzugsweiseeine eine Beschleunigungsrampe und Bremsrampe zur Verringerung der axialen Verschiebungen und der dadurch entstehenden Kräfte auf. Das Förderelement 35 ist vorzugsweise eine kostengünstige handelsübliche Rollenkette mit schwenkbaren Gelenken. An der Unterseite beinhaltet das Förderelement 35 die Mitnehmer 36. Unterhalb des Förderelements 35 befinden sich in der Transportschiene 33 die angetriebenen Transportaschen 2. Die Entladestation 49 ist an der Transportschiene 33 befestigt und beinhaltet schaltbare, mit mindestens einem Antrieb 32 in Richtungen 52, 53 in einem Körper 30 gelagerte elektrische Schaltkontakte 31, welche vorzugsweise gefederte Kohlebürstenkontakte darstellen, mit einem entsprechenden Anschluss an das elektrische Stromnetz. Für die Öffnung der Verschlusseinrichtung 56 zum Entladen der Transporttasche 2 wird der elektrische Antrieb 10 für eine kurze Zeit geschaltet, die reversible Schließverriegelung 18 wird gelöst, die Verschlusseinrichtung 56 öffnet sich und das Fördergut 39 wird aus der Transporttasche 2 entladen. Die Schaltung findet in der Entladestationen 49 dadurch statt, dass elektrischer Strom an die elektrische Kontakte 14 mithilfe der elektrischen Schaltkontakte 31 der Entladestation 49 zugeführt wird, welche im Moment des Erreichens der Kontakte zu den elektrischen Kontakten 14 in Richtung 52 mithilfe der Antriebe 32 bis zum Kontakt mit den elektrischen Kontakten 14 zum Herstellen einer elektrischen Verbindung mit den elektrischen Kontakten 14 und zum Schalten mit elektrischen Strom des elektrischen Antriebs 10 ausfahren, sodass sich die Verschlusseinrichtung 56 öffnet und die Transporttasche 2 entladen wird. Das Entladen kann in beliebiger Förderrichtung stattfinden, nämlich beim Schleifen der elektrischen Kontakte 14 an den geschalteten elektrischen Schaltkontakten 31 sowie auch mit angehaltenen Transporttaschen 2.

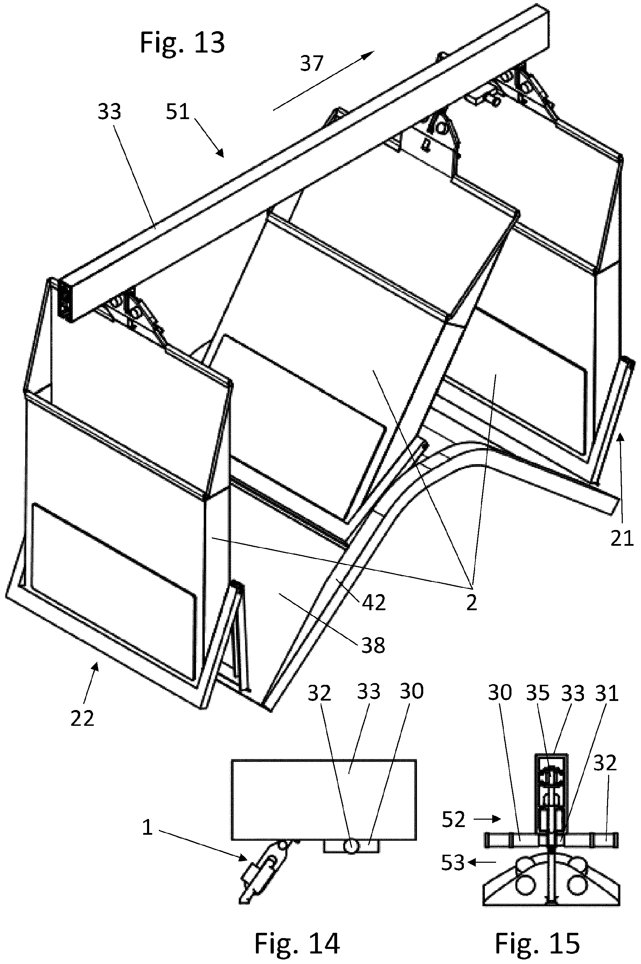

Die Fig. 13 bis 15 zeigen die Schließstation 51 für die Transporttaschen 2 mit einer Verschlusseinrichtung 56, welche einen Vorder-Rahmen 13 und einen Hinter-Rahmen 11 beinhaltet, zum lösbaren Verbinden der Vorderwand 4 mit der Rückwand 5 in den Verschlusszustand 21, um das Fördergut 39 aufzunehmen. Die Mittel zum Verriegeln der Verschlusseinrichtung 56 beinhalten eine Hebe-Rampe 38 mit seitlichen Führungsstegen 42 zum Hochschwenken und Ausrichten der offenen Transporttasche 2. Die offene Transporttasche 2 wird in der Förderrichtung 37 auf dem Steigungsbereich der Hebe Rampe 38 mit der Förderanlage geführt und zentriert verlagert. Die Förderanlage weist eine Transportschiene 33 mit einem kastenförmigen und symmetrisch ausgebildeten Querschnitt mit Förderelement-Führungen 34, mit den oberen Begrenzungsstegen für die Rollen 50 und mit den Laufstegen für die Rollen 50 auf. Das Förderelement 35 ist mittels eines nicht dargestellten Elektromotors umlaufend antreibbar. An der Unterseite beinhaltet das Förderelement 35 Mitnehmer 36. Unterhalb des Förderelements 35 befinden sich in der Transportschiene 33 die angetriebenen Transportaschen 2. Im oberen Bereich der Hebe-Rampe 38 klappt die Verschlusseinrichtung 56 durch die schräge Stellung der Transportasche 2 unter Eigengewicht zusammen, sodass die Verschlusseinrichtung 56 zum Verriegeln vorbereitet ist. Gleichzeitig werden beim Erreichen der elektrischen Kontakte 14, d.h. der Kontaktposition mit den elektrischen Schaltkontakten 31, die elektrischen Schaltkontakte 31 mit dem Antrieb 32 aktiviert und fahren in Richtung 52 aus, um eine elektrische Verbindung mit den elektrischen Kontakten 14 herzustellen und um den elektrischen Antrieb 10 mit einem elektrischen Strom zu schalten. Die reversible Schließverriegelung 18 der Schließmittel 24 öffnet sich, sodass das Halteelement 7 ohne Widerstand zwischen die Führungen 19 einfährt. Nach dem Ausschalten des elektrischen Antriebs 10 schließt die reversible Schließverriegelung 18 das Halteelement 7 mithilfe der Feder und erzeugt den Verschlusszustand 21.

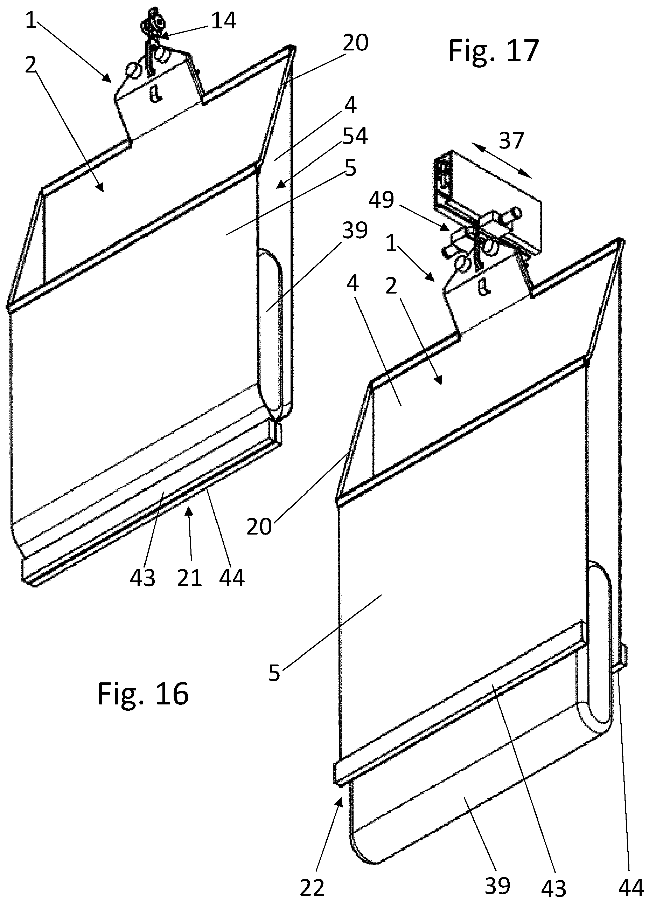

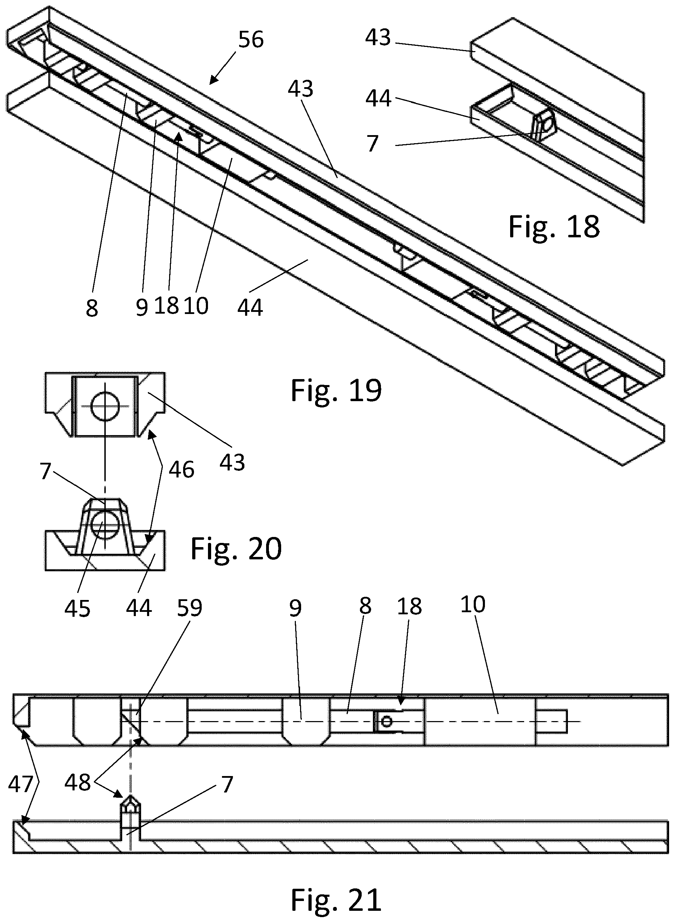

Gemäß Fig. 16 bis 21 wird eine Transporttasche 2 mit einer Verschlusseinrichtung 56 dargestellt, welche ein lineares Vorder-Schließelement 44 und ein lineares Rück-Schließelement 43 aufweist. Das lineare Vorder-Schließelement 44 ist am unteren Bereich der Vorderwand 4 befestigt und das lineare Rück-Schließelement 43 ist gegenüberliegend im unteren Bereich der Rückwand 5 befestigt. Das lineare Vorder-Schließelement 44 und das lineare Rück-Schließelement 43 beinhalten Zentriermittel 46, 47, 48 zum geführten Verlagern der linearen Schließelemente 44 und 43 relativ zueinander in den Verschlusszustand 21. Es ist mindestens ein Schließmittel 24 vorgesehen, vorzugsweise zwei. Die Schließmittel 24 weisen an dem linearen Vorder-Schließelement 44 der Verschlusseinrichtung 56 ein Halteelement 7 und an dem linearen Rück-Schließelement 43 der Verschlusseinrichtung 56 die reversible Schließverriegelung 18 auf und sind gleich aufgebaut, wie es in der Beschreibung oben gemäß den Fig. 1 bis 5 offenbart ist.

Fig. 17 zeigt eine Entladestation 49 mit der Transporttasche 2 mit einer Verschlusseinrichtung 56, welche ein lineares Vorder-Schließelement 44 und ein lineares Rück-Schließelement 43 beinhaltet. Die Entladestation 49 hat den gleichen Aufbau und Eigenschaften, wie es in der Beschreibung oben gemäß den Fig. 11 und 12 offenbart ist.

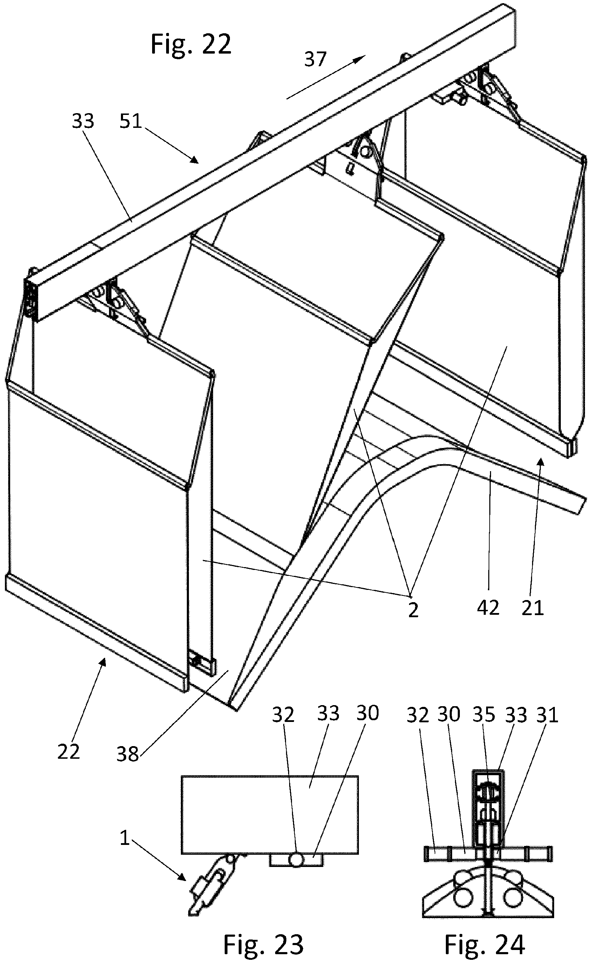

Die Fig. 22 bis 24 zeigen die Schließstation 51 für die Transporttaschen 2 mit einer Verschlusseinrichtung 56 mit linearen Schließelementen 44 und 43.

Die Mittel zum Verriegeln der Verschlusseinrichtung 56 beinhalten eine Hebe-Rampe 38 mit seitlichen Führungsstegen 42 zum Hochschwenken und Ausrichten der offenen Transporttasche 2, um sie dadurch in den Verschlusszustand 21 zu bringen, dass die offene Transporttasche 2 durch die seitlichen Führungsstege 42 mit der Förderanlage in der Förderrichtung 37 auf dem Steigungsbereich der Hebe Rampe 38 geführt und zentriert verlagert wird. Im oberen Bereich der Hebe-Rampe 38 faltet sich die Transporttasche 2 durch die schräge Stellung unter Eigengewicht, und die Verschlusseinrichtung 56 mit den linearen Schließelementen 44 und 43, die die Zentriermittel 46, 47, 48 zum geführten Verlagern der linearen Schließelemente 44 und 43 relativ zueinander aufweisen, wird zum Verriegeln vorbereitet. Gleichzeitig werden, wenn die elektrischen Kontakte 14 die Position zum Kontaktieren der elektrischen Schaltkontakte 31 erreichen, die elektrischen Kontakte 31 mit dem Antrieb 32 aktiviert und fahren in der Richtung 52 aus, um eine elektrische Verbindung mit den elektrischen Kontakten 14 herzustellen und um den elektrischen Antrieb 10 mit einem elektrischen Strom zu schalten. Die reversible Schließverriegelung 18 der Schließmittel 24 öffnet sich, sodass die Halteelemente 7 ohne Widerstand zwischen den Führungen 19 einfahren und die Verschlusseinrichtung 56 nach dem Ausschalten der elektrischen Antriebe 10 mithilfe der Federn in den Verschlusszustand 21 versetzt wird.

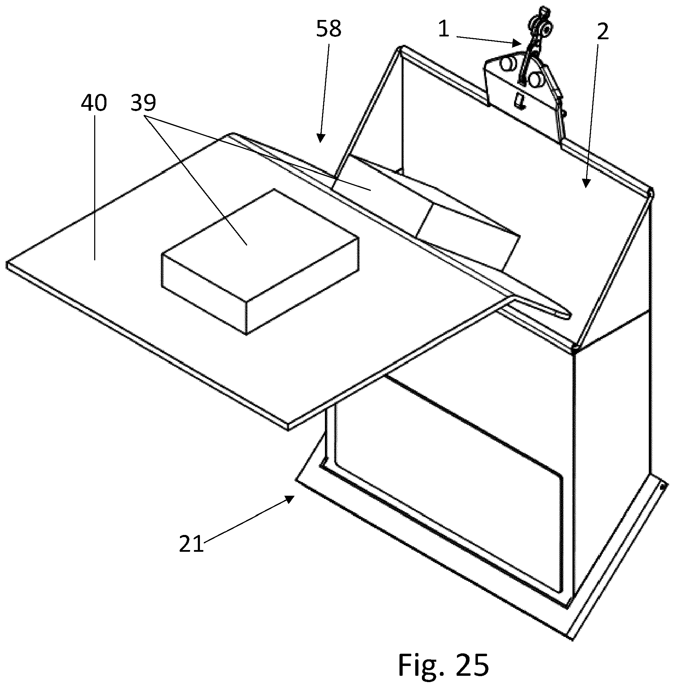

Gemäß Fig. 25 ist die Beladestation 58 abgebildet. Die Beladestation 58 dient zum Aufstellen und Positionieren der Transporttaschen 2 am Beladetisch 40. Das wird erreicht mittels einer nicht dargestellten Förderanlage. Nach dem Aufstellen und Positionieren am Beladetisch 40 wird das Fördergut 39 in die Transportasche 2 manuell oder mit einem Transportband eingeladen. Anschließend wird die beladene Transporttasche 2 vorzugsweise in die Sortieranlage gefördert, um das Fördergut 39 auf die Entladestationen 49 zu verteilen.

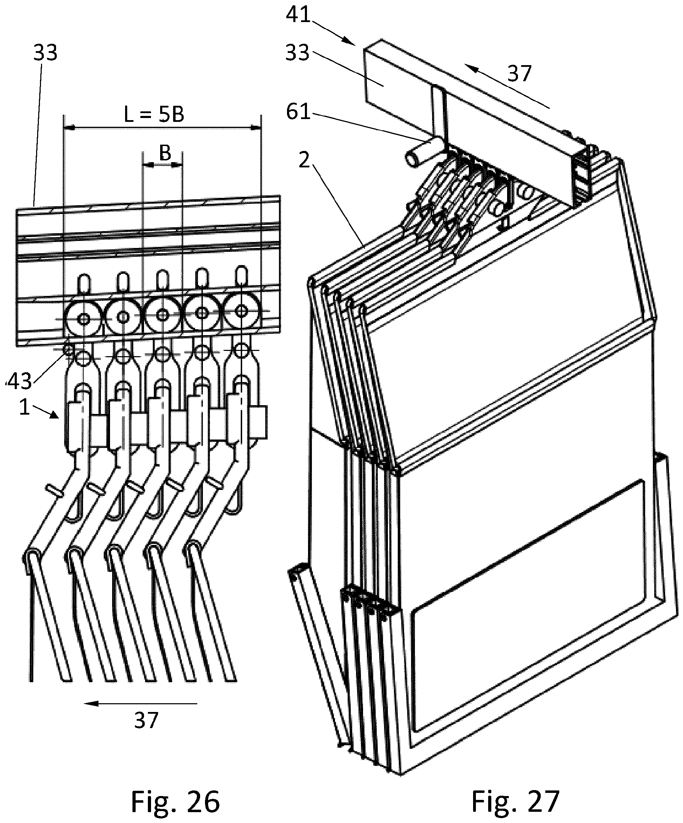

Gemäß Fig. 26 und 27 ist eine Staustrecke 41 mit leeren Transporttaschen 2 gezeigt. Die Transporttaschen 2 werden mit einer Vereinzelung oder Stoppvorrichtungen 61 angehalten und fahren im Gefälle zusammen, wobei sie sich in Förderrichtung 37 falten und so die maximale Dichte zueinander mit einer Gesamttiefe L erzeugen. Die Aufhängeeinrichtung 1 hat ein maximales Maß B und bildet im Wesentlichem die maximale Tiefe einer leeren gefalteten Transporttasche 2 in Förderrichtung 37, vorzugsweise ist es größer, sodass beim Aufstauen der leeren Transportaschen 2 die Gesamttiefe aller Transporttaschen 2 ein Maß von L = B x Zahl der Transportaschen 2 nicht überschreitet.

## Patentansprüche

1. Transporttasche (2) für eine Förderanlage, wobei die Transporttasche (2) zur Aufnahme von Fördergut (39) eingerichtet ist und aufweist:
- eine Tragwand (54), welche eine Vorderwand (4) und eine Rückwand (5) aufweist;
- einen mit der Tragwand (54) verbundenen Beladerahmen (20), der eine obere Beschickungsöffnung der Tragwand (54) darstellt, zum beabstandeten Anordnen der Vorderwand (4) von der Rückwand (5);
- eine Aufhängeeinrichtung (1);
- eine Verschlusseinrichtung (56) zum lösbaren Verbinden der Vorderwand (4) mit der Rückwand (5) in einen Verschlusszustand (21), um das Fördergut (39) aufzunehmen, und zum Öffnen der Verbindung zwischen der Vorderwand (4) und der Rückwand (5) aus dem Verschlusszustand (21) in einen geöffneten Zustand (22), um das Fördergut (39) nach unten freizugeben;
- mindestens ein Schließmittel (24) zum reversiblen Verbinden und Öffnen der Verschlusseinrichtung (56); und
- einen elektrischen Antrieb (10);
wobei das Schließmittel (24) mit dem elektrischen Antrieb (10) betätigt wird und
wobei Mittel für eine Steuerung des elektrischen Antriebs (10) vorgesehen sind;
**dadurch gekennzeichnet, dass**
- der elektrische Antrieb (10) ein elektrischer Zugmagnet, der elektrisch steuerbar ist, mit einer Federrückstellung und einem beweglichen stabförmigen Anker ist; und dadurch, dass
- die Mittel für eine Steuerung des elektrischen Antriebs (10) elektrische Kontakte (14) an der Transporttasche (2) darstellen, die an der Transporttasche (2) angebracht sind und die mit einer elektrischen Leitung (15) mit dem elektrischen Antrieb (10) verbunden sind, um eine elektrische Verbindung mit dem elektrischen Antrieb (10) herzustellen.

2. Transporttasche (2) nach Anspruch 1, wobei
die elektrischen Kontakte (14) an der Aufhängeeinrichtung (1) der Transporttasche (2) angebracht sind.

3. Transporttasche (2) nach einem der Ansprüche 1 bis 2, wobei
die Verschlusseinrichtung (56) einen Vorder-Rahmen (13) und einen Hinter-Rahmen (11) aufweist, die schwenkbar, vorzugsweise mit Scharnieren (12), miteinander verbundenen sind und die zusammenklappbar sind, um den Verschlusszustand (21) oder den geöffneten Zustand (22) der Transporttasche (2) reversibel zu erzeugen, und
der Vorder-Rahmen (13) an der Vorderwand (4) angebracht ist und der Hinter-Rahmen (11) an der Rückwand (5) angebracht ist.

4. Transporttasche (2) nach Anspruch 3, wobei
die Tragwand (54) zumindest teilweise, vorzugsweise vollständig, aus einem flexiblen Stoff, besonders bevorzugt aus einem Textilstoff, gebildet ist,
die Tragwand (54) Seitenwände (3) aufweist,
der Hinter-Rahmen (11) mit seitlichen Bereichen (29) an den Seitenwänden (3) angebracht ist, um das Fördergut (39) gegenüber einem Herausfallen zu sichern, und
sich die Schließmittel (24) in einem unteren Bereich (57) der Verschlusseinrichtung (56) befinden.

5. Transporttasche nach einem der Ansprüche 3 bis 4, wobei
das Schließmittel (24) eine reversible Schließverriegelung (18) auf dem Hinter-Rahmen (11) der Verschlusseinrichtung (56) aufweist,
die reversible Schließverriegelung (18) ein linear bewegliches, stabförmiges Riegelelement (8) aufweist, das mit dem elektrischen Antrieb (10) verbunden und in Linearführungen (9) gelagert ist, und
ein Schließen der reversiblen Schließverriegelung (18) durch die Rückstellfeder des elektrischen Antriebs (10) und ein Öffnen durch eine Schaltung des elektrischen Antriebs (10) betätigt wird.

6. Transporttasche (2) nach Anspruch 5, wobei
das Schließmittel (24) auf dem Vorder-Rahmen (13) der Verschlusseinrichtung (56) ein Halteelement (7) mit einer Öse (45) aufweist, und
das Halteelement (7) beim Zusammenklappen der Verschlusseinrichtung (56) so positioniert ist, dass das Riegelelement (8) in die Öse (45) des Halteelements (7) einfahren kann, um die Verschlusseinrichtung (56) zu schließen.

7. Transporttasche (2) für eine Förderanlage, wobei die Transporttasche (2) zur Aufnahme von Fördergut (39) eingerichtet ist und aufweist:
- eine Tragwand (54), welche eine Vorderwand (4) und eine Rückwand (5) aufweist;
- einen mit der Tragwand (54) verbundenen Beladerahmen (20), der eine obere Beschickungsöffnung der Tragwand (54) darstellt, zum beabstandeten Anordnen der Vorderwand (4) von der Rückwand (5);
- eine Aufhängeeinrichtung (1);
- eine Verschlusseinrichtung (56) zum lösbaren Verbinden der Vorderwand (4) mit der Rückwand (5) in einen Verschlusszustand (21), um das Fördergut (39) aufzunehmen, und zum Öffnen der Verbindung zwischen der Vorderwand (4) und der Rückwand (5) aus dem Verschlusszustand (21) in einen geöffneten Zustand (22), um das Fördergut (39) nach unten freizugeben;
- mindestens ein Schließmittel (24) zum reversiblen Verbinden und Öffnen der Verschlusseinrichtung (56);
- einen elektrischen Antrieb (10); und
- Mittel für eine Steuerung des elektrischen Antriebs (10);
wobei das Schließmittel (24) mit dem elektrischen Antrieb (10) betätigt wird;
**dadurch gekennzeichnet, dass**
die Verschlusseinrichtung (56) einen Vorder-Rahmen (13) und einen Hinter-Rahmen (11) aufweist, die schwenkbar, vorzugsweise mit Scharnieren (12), miteinander verbundenen sind und die zusammenklappbar sind, um den Verschlusszustand (21) oder den geöffneten Zustand (22) der Transporttasche (2) reversibel zu erzeugen, und
wobei der Vorder-Rahmen (13) an der Vorderwand (4) angebracht ist und der Hinter-Rahmen (11) an der Rückwand (5) angebracht ist,
wobei die Tragwand (54) zumindest teilweise, vorzugsweise vollständig, aus einem flexiblen Stoff gebildet ist,
wobei die Tragwand (54) Seitenwände (3) aufweist,
wobei der Hinter-Rahmen (11) mit seitlichen Bereichen (29) an den Seitenwänden (3) angebracht ist, um das Fördergut (39) gegenüber einem Herausfallen zu sichern, und
wobei sich die Schließmittel (24) in einem unteren Bereich (57) der Verschlusseinrichtung (56) befinden.

8. Förderanlage mit:
- einer Transportschiene (33),
- einem in der Transportschiene (33) in einer Förderrichtung (37) bewegbar gelagerten Förderelement (35) mit Mitnehmern (36),
- mindestens einer in der Transportschiene (33) unterhalb des Förderelements (35) gelagerten Transporttasche (2) nach einem der Ansprüche 1 bis 7,
- einer Entladestation (49) für die mindestens eine Transporttasche (2) mit Mittel zum Öffnen der Verschlusseinrichtung (56) der mindestens einen Transporttasche (2), um das Fördergut (39) auf Entladeplätze auszuladen,
- einer Schließstation (51) für die mindestens eine Transporttasche (2) mit Mittel zum Verriegeln der Verschlusseinrichtung (56) der mindestens einen Transporttasche (2),
- einer Beladestation (58) für die mindestens eine Transporttasche (2) mit einem Beladetisch (40) zum manuellen Transport des Förderguts (39) in die mindestens eine Transporttasche (2) oder mit einem Transportband zum automatischen Transport des Förderguts (39) in die mindestens eine Transporttasche (2), und
- mit Staustrecken (41) mit Stoppvorrichtungen (61).

9. Entladestation (49) mit einer Transporttasche (2) nach einem der Ansprüche 1 bis 6 und mit Mitteln zum Öffnen der Verschlusseinrichtung (56), wobei
die Mittel zum Öffnen der Verschlusseinrichtung (56) mit einem elektrischen Strom versorgte elektrische Schaltkontakte (31) sind, und
die elektrischen Schaltkontakte (31) beim Schalten einen Kontakt mit den elektrischen Kontakten (14) an der Transporttasche (2) erzeugen und eine elektrische Verbindung mit dem elektrischen Antrieb (10) herstellen, um den elektrischen Antrieb (10) so zu schalten, dass sich die Verschlusseinrichtung (56) öffnet und das Fördergut (39) ausgeladen wird.

10. Schließstation (51) mit einer Transporttasche (2) nach einem der Ansprüche 1 bis 6 und mit Mitteln zum Verriegeln der Verschlusseinrichtung (56) der Transporttasche (2), wobei
die Mittel zum Verriegeln der Verschlusseinrichtung (56) eine Hebe-Rampe (38) aufweisen, zum Hochschwenken der Transporttasche (2) beim Fördern in Richtung (37) in einem Steigungsbereich der Hebe-Rampe (38) so dass durch eine Schrägstellung der Transporttasche (2) ein zentriertes Zusammenführen der Verschlusseinrichtung (56) in den Verschlusszustand (21) entsteht und dass gleichzeitig elektrische Schaltkontakte (31) aktiviert werden, um eine elektrische Verbindung mit dem elektrischen Antrieb (10) herzustellen mithilfe der elektrischen Kontakte (14) an der Transporttasche (2) und um eine reversible Schließverriegelung (18) der Schließmittel (24) zu öffnen, sodass die Verschlusseinrichtung (56) zum Verriegeln bereitgestellt wird und sodass der Verschlusszustand (21) nach einem Deaktivieren des Antriebs (10) mithilfe der Rückstellfeder erzeugt wird.

## Claims

1. A transport bag (2) for a conveying system, wherein the transport bag (2) is configured for receiving conveying good (39) and comprises:
- a support wall (54) comprising front wall (4) and rear wall (5),
- a loading frame (20), which is connected to the support wall (54), representing an upper loading opening of the support wall (54), for arranging the front wall (4) spaced apart from the rear wall (5),
- a suspension device (1),
- a closure device (56) for detachably connecting the front wall (4) to the rear wall (5) in a closure state (21) for receiving the conveying good (39) and for opening the connection between the front wall (4) and the rear wall (5) from the closure state (21) into an open state (22) in order to release the conveying good (39) downwards,
- at least one closing means (24) for reversibly connecting and opening the closure device (56), and
- an electric drive (10);
wherein the closing means (24) is operated with the electric drive (10) und wherein means for control of the electric drive (10) are provided, **characterized in that**
- the electrical drive (10) is an electric traction magnet, which is electrically controllable, including a spring return and a movable rod-shaped anchor; and **in that**
- the means for control of the electric drive (10) are electrical contacts (14) on the transport bag (2), which are attached to the transport bag (2) and connected, by an electric line (15), to the electric drive (10) in order to establish an electrical connection to the electric drive (10).

2. The transport bag (2) of claim 1 wherein
the electric contacts (14) are attached to the suspension device (1) of the transport bag (2).

3. The transport bag (2) of any of claims 1 to 2 wherein
the closure device (56) comprises a front frame (13) and a rear frame (11) being pivotally connected to each other, preferably by hinges (12), and foldable to each other for the reversibly generating of the closure state (21), or the open state (22), of the transport bag (2), and
the front frame (13) is attached to the front wall (4) and the rear frame (11) is attached to the rear wall (5).

4. The transport bag (2) of claim 3, wherein
the support wall (54) is formed at least partially, preferably completely, of a flexible fabric, in particular preferably of a textile fabric,
the support wall (54) comprises side walls (3),
the rear frame (11) is attached with lateral sections (29) to the side walls (3) for securing the conveying good (39) from falling out, and
the closing means (24) is located in a lower section (57) of the closure device (56).

5. The transport bag of any of claims 3 to 4, wherein
the closing means (24) comprises a reversible closing lock (18) on the rear frame (11) of the closure device (56),
the reversible closing lock (18) comprises a linearly movable rod-shaped locking element (8) connected to the electric drive (10) and supported in the linear guides (9), and
closing of the reversible closing lock (18) is operated by the return spring of the electric drive (10) and opening is operated by switching of the electric drive (10).

6. The transport bag (2) of claim 5, wherein
the closing means (24) comprises, on the front frame (13) of the closure device (56), a holding element (7) having an eyelet (45), and
when the closure device (56) is folded together, the holding element (7) is positioned such that the locking element (8) is movable into the eyelet (45) of the holding element (7) for closing the closure device (56).

7. A transport bag (2), the transport bag being configured for receiving conveying good (39), and comprising:
- a support wall (54) comprising front wall (4) and rear wall (5);
- a loading frame (20), which is connected to a support wall (54), representing an upper loading opening of the support wall (54) for arranging the front wall (4) spaced apart from the rear wall (5);
- a suspension device (1);
- a closure device (56) for detachably connecting the front wall (4) to the rear wall (5) into a closure state (21) for receiving the conveying good (39) and for releasing the connection between the front wall (4) and the rear wall (5) from the closure state (21) into an open state (22) for releasing the conveying good (39) downwards;
- at least one closing means (24) for reversibly connecting and opening the closure device (56);
- an electric drive (10); and
- means for control of the electric drive (10);
wherein the closing means (24) is operated by the electric drive (10);
**characterized in that** the closure device (56) comprises a front frame (13) and a rear frame (11) being pivotally connected to each other, preferably by hinges (12), and foldable to each other for reversible generation of a closure state (21), or an open state (22), of the transport bag (2), and
wherein the front frame (13) is attached to the front wall (4), and the rear frame (11) is attached to the rear wall (5);
wherein the support wall (54) is formed at least partially of a flexible fabric;
wherein the support wall (54) comprises side walls (3);
wherein the rear frame (11) is attached with lateral sections (29) to the side walls (3) for securing the conveying good (39) from falling out; and
wherein the closing means (24) is located in a lower section (57) of the closure device (56).

8. A conveying installation including
- a transport rail (33),
- a conveying element (35), which is movably supported in the transport rail (33) along a conveying direction (37), with drivers (36),
- at least one transport bag (2) of one of claims 1 to 7 supported in the transport rail (33) below the conveying element (35),
- an unloading station (49) for the at least one transport bag (2) including means for opening the closure device (56) of the at least one transport bag (2) for unloading the conveying good (39) onto the unloading locations,
- a closing station (51) for the at least one transport bag (2) including means for locking the closure device (56) of the at least one transport bag (2),
- a loading station (58) for the at least one transport bag (2) including a loading table (40) for manually, or by means of a transport belt automatically, transporting the conveying good (39) into the at least one transport bag (2), and
- accumulation paths (41) including separations and stopping devices (61).

9. An unloading station (49) including a transport bag (2) of one of claims 1 to 6 and means for opening the closure device (56), wherein
the means for opening the closure device (56) are electric switching contacts (31)supplied with electric current, and
the electric switching contacts (31) generate, when switched, a contact to the electric contacts (14) on the transport bag (2), and establish an electric connection to the electric drive (10) for switching the electric drive (10) so that the closure device (56) opens and the conveying good (39) is unloaded.

10. A closing station (51) including a transport bag (2) of any of claims 1 to 6 and means for locking the closure device (56) of the transport bag (2), wherein
the means for locking the closure device (56) comprise a lifting ramp (38) for swiveling up the transport bag (2) when conveyed in direction (37) in an inclination section of the lifting ramp (38) so that, due to an inclined position of the transport bag (2), a centered merging of the closure device (56) into the closure state (21) is created, and
at the same time the electric switching contacts (31) are activated for establishing an electric connection to the electric drive (10) using the electric contacts (14) of the transport bag (2) and for opening the reversible closing lock (18) of the closing means (24) so that the closure device (56) is provided for locking, and, after deactivating the drive (10), the closure state (21) is generated by using a return spring.

## Revendications

1. Sac de transport (2) pour une installation d'acheminement, dans lequel le sac de transport (2) est conçu pour recevoir des produits à acheminer (39) et présente :
- une paroi de support (54) qui présente une paroi avant (4) et une paroi arrière (5) ;
- un cadre de chargement (20) relié à la paroi de support (54) et constituant une ouverture de chargement supérieure de la paroi de support (54), permettant de disposer la paroi avant (4) à une certaine distance de la paroi arrière (5) ;
- un appareil de suspension (1) ;
- un appareil de fermeture (56) permettant de relier de manière amovible la paroi avant (4) à la paroi arrière (5) dans un état de fermeture (21) afin de recevoir le produit à acheminer (39), et permettant d'ouvrir la liaison entre la paroi avant (4) et la paroi arrière (5) hors de l'état de fermeture (21) vers un état ouvert (22) afin de libérer le produit à acheminer (39) vers le bas ;
- au moins un moyen de fermeture (24) permettant de relier et d'ouvrir de manière réversible l'appareil de fermeture (56) ; et
- un entraînement électrique (10) ;
dans lequel le moyen de fermeture (24) est actionné par l'entraînement électrique (10) et
dans lequel des moyens pour une commande de l'entraînement électrique (10) sont prévus ; **caractérisé en ce que**
- l'entraînement électrique (10) est un aimant de traction électrique qui peut être commandé électriquement, comportant un rappel par ressort et une armature mobile en forme de tige ; **et en ce que**
- les moyens pour une commande de l'entraînement électrique (10) constituent des contacts électriques (14) sur le sac de transport (2), lesquels sont montés sur le sac de transport (2) et sont connectés à l'entraînement électrique (10) au moyen d'une ligne électrique (15) afin d'établir une connexion électrique avec l'entraînement électrique (10).

2. Sac de transport (2) selon la revendication 1, dans lequel
les contacts électriques (14) sont montés sur l'appareil de suspension (1) du sac de transport (2).

3. Sac de transport (2) selon l'une des revendications 1 à 2, dans lequel
l'appareil de fermeture (56) présente un cadre avant (13) et un cadre arrière (11) qui sont reliés l'un à l'autre de manière à pouvoir pivoter, de préférence au moyen de charnières (12), et qui peuvent être repliés pour produire de manière réversible l'état de fermeture (21) ou l'état ouvert (22) du sac de transport (2), et
le cadre avant (13) est monté sur la paroi avant (4) et le cadre arrière (11) est monté sur la paroi arrière (5).

4. Sac de transport (2) selon la revendication 3, dans lequel
la paroi de support (54) est formée au moins partiellement, de préférence entièrement, à partir d'un tissu flexible, plus préférablement d'un tissu textile,
la paroi de support (54) présente des parois latérales (3),
le cadre arrière (11) est monté sur les parois latérales (3) avec des zones latérales (29) pour empêcher le produit à acheminer (39) de tomber, et
les moyens de fermeture (24) se situent dans une zone inférieure (57) de l'appareil de fermeture (56).

5. Sac de transport selon l'une des revendications 3 à 4, dans lequel
le moyen de fermeture (24) présente un moyen de verrouillage de fermeture réversible (18) sur le cadre arrière (11) de l'appareil de fermeture (56),
le moyen de verrouillage de fermeture réversible (18) présente un élément de verrouillage (8) en forme de tige, mobile linéairement, relié à l'entraînement électrique (10) et monté dans des guides linéaires (9), et
une fermeture du moyen de verrouillage de fermeture réversible (18) est actionnée par le ressort de rappel de l'entraînement électrique (10) et une ouverture est actionnée par un circuit de l'entraînement électrique (10).

6. Sac de transport (2) selon la revendication 5, dans lequel
le moyen de fermeture (24) présente, sur le cadre avant (13) de l'appareil de fermeture (56), un élément de retenue (7) comportant un oeillet (45), et
lorsque l'appareil de fermeture (56) est replié, l'élément de retenue (7) est positionné de sorte que l'élément de verrouillage (8) peut s'introduire dans l'oeillet (45) de l'élément de retenue (7) afin de fermer l'appareil de fermeture (56).

7. Sac de transport (2) pour une installation d'acheminement, dans lequel le sac de transport (2) est conçu pour recevoir des produits à acheminer (39) et présente :
- une paroi de support (54) qui présente une paroi avant (4) et une paroi arrière (5) ;
- un cadre de chargement (20) relié à la paroi de support (54) et constituant une ouverture de chargement supérieure de la paroi de support (54), permettant de disposer la paroi avant (4) à une certaine distance de la paroi arrière (5) ;
- un appareil de suspension (1) ;
- un appareil de fermeture (56) permettant de relier de manière amovible la paroi avant (4) à la paroi arrière (5) dans un état de fermeture (21) afin de recevoir le produit à acheminer (39), et permettant d'ouvrir la liaison entre la paroi avant (4) et la paroi arrière (5) hors de l'état de fermeture (21) vers un état ouvert (22) afin de libérer le produit à acheminer (39) vers le bas ;
- au moins un moyen de fermeture (24) permettant de relier et d'ouvrir de manière réversible l'appareil de fermeture (56) ;
- un entraînement électrique (10) ; et
- des moyens pour une commande de l'entraînement électrique (10) ;
dans lequel le moyen de fermeture (24) est actionné par l'entraînement électrique (10) ;
**caractérisé en ce que**
l'appareil de fermeture (56) comprend un cadre avant (13) et un cadre arrière (11) qui sont reliés l'un à l'autre de manière à pouvoir pivoter, de préférence au moyen de charnières (12), et qui peuvent être repliés pour produire de manière réversible l'état de fermeture (21) ou l'état ouvert (22) du sac de transport (2), et
dans lequel le cadre avant (13) est monté sur la paroi avant (4) et le cadre arrière (11) est monté sur la paroi arrière (5),
dans lequel la paroi de support (54) est formée au moins partiellement, de préférence entièrement, à partir d'un tissu flexible,
dans lequel la paroi de support (54) présente des parois latérales (3),
dans lequel le cadre arrière (11) est monté sur les parois latérales (3) avec des zones latérales (29) pour empêcher le produit à acheminer (39) de tomber, et
dans lequel les moyens de fermeture (24) se situent dans une zone inférieure (57) de l'appareil de fermeture (56).

8. Installation d'acheminement comportant :
- un rail de transport (33),
- un élément d'acheminement (35) monté dans le rail de transport (33) de manière mobile dans une direction d'acheminement (37) et comportant des moyens d'entraînement (36),
- au moins un sac de transport (2) selon l'une des revendications 1 à 7 monté dans le rail de transport (33) en dessous de l'élément d'acheminement (35),
- un poste de déchargement (49) pour l'au moins un sac de transport (2) comportant des moyens permettant d'ouvrir l'appareil de fermeture (56) de l'au moins un sac de transport (2) afin de décharger le produit à acheminer (39) sur des emplacements de déchargement,
- un poste de fermeture (51) pour l'au moins un sac de transport (2) comportant des moyens permettant de verrouiller l'appareil de fermeture (56) de l'au moins un sac de transport (2),
- un poste de chargement (58) pour l'au moins un sac de transport (2) comportant une table de chargement (40) pour le transport manuel du produit à acheminer (39) dans l'au moins un sac de transport (2) ou comportant une bande transporteuse pour le transport automatique du produit à acheminer (39) dans l'au moins un sac de transport (2), et
- comportant des voies d'accumulation (41) comportant des dispositifs d'arrêt (61).

9. Poste de déchargement (49) comportant un sac de transport (2) selon l'une des revendications 1 à 6 et comportant des moyens permettant d'ouvrir l'appareil de fermeture (56), dans lequel
les moyens permettant d'ouvrir l'appareil de fermeture (56) sont des contacts de commutation électriques (31) alimentés par un courant électrique, et
les contacts de commutation électriques (31) produisent, lors de la commutation, un contact avec les contacts électriques (14) sur le sac de transport (2) et établissent une connexion électrique avec l'entraînement électrique (10) afin de commuter l'entraînement électrique (10) de sorte que l'appareil de fermeture (56) s'ouvre et que le produit à acheminer (39) est déchargé.

10. Poste de fermeture (51) comportant un sac de transport (2) selon l'une des revendications 1 à 6 et comportant des moyens permettant de verrouiller l'appareil de fermeture (56) du sac de transport (2), dans lequel
les moyens permettant de verrouiller l'appareil de fermeture (56) présentent une rampe de levage (38), pour faire pivoter vers le haut le sac de transport (2) lors de l'acheminement dans la direction (37) dans une zone d'inclinaison de la rampe de levage (38), de sorte que, par une position inclinée du sac de transport (2), une concentration centrée de l'appareil de fermeture (56) dans l'état de fermeture (21) est obtenue et que, simultanément, des contacts de commutation électriques (31) sont activés, afin d'établir une connexion électrique avec l'entraînement électrique (10) à l'aide des contacts électriques (14) sur le sac de transport (2) et d'ouvrir un moyen de verrouillage de fermeture réversible (18) des moyens de fermeture (24), de sorte que l'appareil de fermeture (56) est mis à disposition pour le verrouillage et de sorte que l'état de fermeture (21) est produit après une désactivation de l'entraînement (10) à l'aide du ressort de rappel.
